# EUROPEAN PATENT APPLICATION

(11) **EP 1 262 314 A2**
(43) Date of publication of application: **04.12.2002**
(21) Application number: 02076919.6
(22) Date of filing: 14.05.2002
(51) Int. Cl.: B32B 27/12, B32B 7/02

(54) **Protective structure for covering articles and production method of said structure**

(30) Priority: 15.05.2001 IT MI20010992
(71) Applicant: Confezioni Andrea di Tavelli Bruno & C. S.n.c., 21100 Varese (IT)
(72) Inventor: Tavelli, Bruno, 21100 Varese (IT); Tavelli, Andrea, 21010 Montegrino Valtravaglia (IT)
(74) Representative: Coppo, Alessandro

(57) **Abstract**

A protective structure for covering articles, comprising an internal layer (10), consisting of a film (12) made of extendable material coupled, for the whole extent, with a surface (11) of fabric or non-woven fabric (NWF), and an external layer (13) made of a substantially elastic and extendable, such as polyethylene or polypropylene; the production method of the structure comprises a melting or gluing phase of the two surfaces (11,12) forming the internal layer (10) and an adhesion phase of the internal layer (10) thus formed, on the part of the film (12) made of extendable material, to the external layer (13), followed by a thermoretraction process on the article to be packaged, to ensure complete protection of the article from external agents during transportation.

## Description

The present invention relates to a protective structure for covering articles and its production method, together with the packaging method of the article with the structure thus obtained.

More specifically, the invention relates to a protective packaging structure for bulky articles, such as cars, vans, motorcycles, industrial machines, boats or other objects which are usually transported from the production sites to the commercial centres where they are exhibited for their retail sale.

During transportation, these articles must therefore not be directly subjected to external agents, such as atmospheric agents, and must not be damaged by any kind of impact which can occur inside the transporting vehicle.

In this respect, films made of plastic material do not provide the guaranteed protection required as, due to the considerable dimensions of the articles, they must be sufficiently stretched to englobe the whole object and the creation of such tensions can cause the film to tear; in any case, as the film is wrapped around the article, adhesion phenomena can occur, which can easily transport dirt and humidity and damage the paint of the body-work.

Packaging with plastic films, moreover, does not adequately solve the problem relating to undesired impacts which can occur within the transport vehicle, abrasions of the body-work caused by the plastic film itself or by any possible small stones thrown up by the tyres of other vehicles travelling near the transport vehicle.

Not even the use of particularly soft and extendable plastic materials is able to give the desired results of compactness and rigidity of the structure; these materials, in fact, cannot neutralize the effects of impact and other external agents on the body-work of the article, leading to substantial repair costs or even the substitution of the article.

The forced substitution of the article also causes longer delivery times for the end-customer and problems relating to the running of warehouses and sales centres.

An objective of the present invention is therefore to avoid the above disadvantages, or to produce a protective structure for covering articles, which is functionally efficient, as it is adequately tenacious, resistant and adaptable to the dimensions and geometry of the article and, at the same time, capable of effectively mitigating external impacts, with respect to the traditional techniques.

A further objective of the present invention is to indicate a protective structure for covering articles, which allows the article to be efficiently preserved from the attack of atmospheric agents or other corrosive agents.

Yet another objective of the present invention is to indicate a method for the production of the protective covering structure, together with a packaging method of the article using said protective structure.

Last but not least, an objective of the present invention is to produce a protective structure for the simple and economic covering of articles without the need for complex or costly technologies.

These objectives are achieved by a protective structure for covering articles, according to claim 1, and its production method, according to claim 10, to which reference should be made for the sake of brevity.

According to an illustrative and preferred but non-limiting embodiment of the present invention, the protective structure advantageously comprises an external film made of an extendable material and an internal portion, consisting of two layers closely attached by means of a melting or total gluing process.

The film made of elastic and extendable material is in contact with external agents, whereas the innermost layer, which is in contact with the body-work of the article to be transported, is made of fabric or NWF (non-woven fabric); in addition, an intermediate layer made of light, extendable material, such as polyethylene, is firmly adhered to the fabric, in order to guarantee the maximum protection of the article against impact and abrasion.

This is due to the fact that the internal material softly adheres to the body-work as a result of its yielding natura, creating a particular cushioning effect similar to that obtained with particular packaging wrappings.

Once a thermoretraction phase of the structure has been effected on the end-article, the external layer conserves its own elasticity and envelops the article so as to resist high breaking stress.

Furthermore, with a slight shrinkage of the extendable material of the outer layer, which is deformed at the high temperatures reached with the thermoretraction process, the internal fabric or NWF, associated with the internal extendable film, has an embossed effect as it undergoes even lesser shrinkage; the minimum shrinkage of the outer layer creates the cushioning effect mentioned above.

In practice, the internal layer, made of fabric or NWF, acts as a reinforcing material of the outer plastic film, both in the covering phase of the article and in the subsequent thermoretraction phase of the structure on the article; after the thermoretraction process, in fact, the outer film shrinks slightly, causing an increase in the toughness and tensile strength of the whole structure, whereas the whole inner layer, which does not re-enter, continues to act as a reinforcing element.

Finally, by using the structure according to the invention, it is possible to reduce the internal layer of fabric or NWF, reducing the total weight of the end-article, maintaining the same tensile strength, with respect to the traditional structures; any possible risk of detachment of the layers is, in fact, totally eliminated by the presence of the internal layer made of extendable plastic material.

Further characteristics and advantages of the present invention will appear evident from the following description and enclosed drawings, relating to an illustrative but non-limiting embodiment of the protective structure for the packaging of articles, wherein:

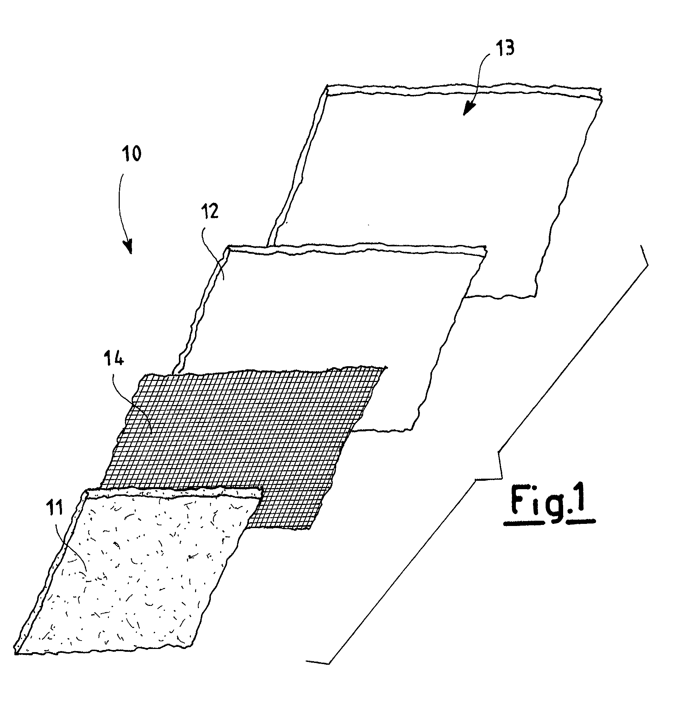

- figure 1 is an exploded schematic perspective view of a protective structure for covering articles, according to the present invention;
- figure 2 is a schematic view in section of a portion of the protective covering structure, enlarged and overturned with respect to that of figure 1, according to the present invention.

With reference to the above figures, the protective structure for covering articles, according to the present invention, comprises an internal layer 10, consisting of a surface 11 made of fabric or NWF and a film 12 made of extendable and elastic plastic material; in particular, the surface 11 rests on the article to be packaged, whereas the film 12 is attached to the outer layer 13, which is also made of extendable material.

In preferred but non-limiting embodiments of the invention, the surface 11 made of fabric or NWF can consist of traditional fibres, such as cotton or polyester, the internal layer 12 can be made of polyethylene, whereas the external layer 13 usually consists of plastic materials, such as polyethylene or polypropylene or other biodegradable materials.

The internal layer 11 made of fabric or NWF is firmly connected with the layer made of extendable material 12; in reality, the two films are joined by means of a uniform layer 14 of glue or they are completely amalgamated with each other, as a result of a polythening process whereby the polyethylene of the layer 12 is melted onto the internal layer 11 without the aid of a glue.

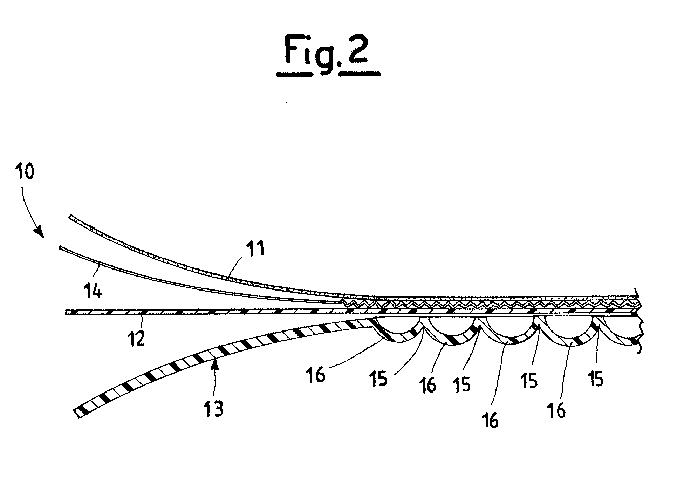

On the other side, the external layer 13 made of extendable material is connected to the film 12, by means of gluing, using a spray process, in intermittent points, indicated in figure 2 with 15, so that the extendable plastic material of the external layer 13 adheres non-uniformly to the extendable plastic material of the internal layer 12.

The protective structure thus formed is then used for packaging by enveloping it around the article to be protected, with the lower surface of the layer 11 made of fabric in contact with the above article.

Consequently, by means of a traditional thermoretraction process, whereby heat is supplied to the structure, the structure is secured to the article in a known way.

As the fibres of the internal layer 11 have a melting point which is significantly higher than the further layers 12, 13 made of extendable plastic material, during the thermoretraction phase, these plastic layers 12, 13 pass to a crystalline state, causing a reduction in their dimensions.

As the internal layer 12, however, is attached to the fibres of the inner layer 11, said internal layer 12, made of plastic material, undergoes a much slighter shrinkage with respect to that of the external layer 13; this results in an embossed effect of the internal layers 11, 12, whereas the outer layer 13 stretches forming the shape of the article which it envelops.

This consequently creates a cushioning effect of the structure (as can be clearly seen in figure 2) on the part of the external surface, which, furthermore, is discontinuously attached to the layer 12, in order to favour the formation of a series of cushions (specifically indicated with 16 in figure 2), suitable for maintaining the integrity of the article from external impacts.

In accordance with what is described above, the relative method for the production of the structure according to the invention comprises the following phases: melting of the upper layer 12 made of extendable plastic material into the internal layer 11 made of fabric or NWF (alternatively, the internal layer 11 is continuously attached to the plastic material, by means of a glue of the known type); adhesion, in discontinuous points, of the external layer 13, made of extendable plastic material, onto the plastic material of the layer 12; thermoretraction effected on the end-article to be packaged inside the protective structure.

In this way, it is possible to reduce the thickness of the layer 11 made of fabric or NWF, with respect to the known techniques, thus reducing the total weight of the structure but at the same time obtaining the same mechanical characteristics relating to toughness and tensile strength of the structure, as the risk of a possible detachment of the internal layer made of fibre 11 from the first layer 12 made of plastic material is avoided (also for minimum thicknesses of the layer 11) due to the fact that the internal layer 11 is firmly and totally connected to the extendable plastic layer 12 and the adjacent surfaces of the layers 11 and 12 have no separation points.

Furthermore, with the same thickness and weight of the structure, compared to the known art, using the protective structure according to the invention, better results are obtained with respect to tensile strength and toughness in general, specifically due to the fact that an adequate compactness of the fabric or NWF is obtained, which is fixed by a plastic material dissolved above it.

In addition, the structure according to the invention preserves the body-work of the packaged article better, with respect to the known art, as the glue used for discontinuously attaching the outer layer 13 to the layer 12 is prevented from penetrating the fibres of fabric, and consequently from damaging the underlying article; this advantage is also due to the fact that the molten plastic material of the layer 12 forms a membrane which is impermeable to the passage of fluids that can penetrate the layer 12 itself.

Finally, the complete melting of the extendable material forming the layer 12 onto the internal layer 11 causes the complete coverage of any possible interstices, favouring a lower absorption of external humidity inside the packaging and consequently in contact with the article.

The characteristics of the protective structure for covering articles, which is object of the present invention, as also the advantages, are clearly evident from the description provided.

Numerous variations can obviously be applied to the protective structure in question, without excluding any of the novelty principles which characterize the inventive idea illustrated, and it is also evident that, in the embodiment of the invention, the materials, forms and dimensions of the details illustrated can vary according to the demands and can be substituted with other technically equivalent alternatives.

## Claims

1. A protective structure for covering articles, of the type comprising at least one internal layer (10), which includes at least one surface (11) made of fabric or non-woven fabric, and at least one external layer (13), made of extendable plastic material, **characterized in that** said surface (11) made of fabric or non-woven fabric is coupled with at least one film (12) made of extendable material.

2. The protective structure according to claim 1, **characterized in that** said surface (11) made of fabric or non-woven fabric is coupled with said film (12) made of extendable material, by means of uniform layers (14) of adhesive substances, which are distributed with continuity.

3. The protective structure according to claim 1, **characterized in that** said surface (11) made of fabric or non-woven fabric is coupled with said film (12) made of extendable material, by means of a melting process of said film (12) onto said surface (11) made of fabric or non-woven fabric without the aid of gluing or adhesive substances, so that said film (12) and said surface (11) are totally and uniformly connected.

4. The protective structure according to claim 1, **characterized in that** said surface (11) made of fabric or non-woven fabric rests on said article to be packaged, whereas said film (12) made of extendable material adheres to said external layer (13).

5. The protective structure according to claim 1, **characterized in that** said surface (11) made of fabric or non-woven fabric comprises traditional fibres, such as cotton or polyester, said film (12) is made of polyethylene, whereas said external layer (13) comprises plastic materials, such as polyethylene or polypropylene.

6. The protective structure according to claim 3, **characterized in that** said melting process comprises at least one polythening process whereby said film (12) made of extendable material is melted onto said internal layer (11) made of fabric or non-woven fabric.

7. The protective structure according to claim 1, **characterized in that** said external layer (13) made of extendable material is connected to said film (12), also made of extendable material, by the spraying of adhesive substances in intermittent and discreet points (15).

8. The protective structure according to claim 1, **characterized in that**, after being enveloped on said article, it is subjected to a thermoretraction process, whereby heat is supplied to said structure to fix it to the article.

9. The protective structure according to claim 8, **characterized in that** said thermoretraction process causes a shrinkage in the dimensions of said external layer (13) which is greater with respect to the shrinkage in dimensions of said film (12).

10. A method for the production of a protective structure for covering articles according to claim 1, **characterized in that** it comprises the following phases:
- melting of said surface (11) made of fabric or non-woven fabric onto said film (12) made of extendable material or uniform adhesion of said surface (11) onto said film (12);
- adhesion of said external layer (13) made of extendable material onto said film (12), by the deposition of an adhesive substance in distributed points (14);
- thermoretraction of said protective structure directly on the end-article to be packaged.
